# EUROPEAN PATENT APPLICATION

(11) **EP 2 293 214 A1**
(43) Date of publication of application: **09.03.2011**
(21) Application number: 09169434.9
(22) Date of filing: 03.09.2009
(51) Int. Cl.: G06F 21/00, G06F 3/033

(54) **Method and system for accepting an input to an electronic device**

(71) Applicant: Advanced Digital Broadcast S.A., 1292 Chambesy (CH)
(72) Inventor: Wielgosz, Marcin, 65-012, Zielona Gora (PL)
(74) Representative: Pawlowski, Adam

(57) **Abstract**

A method for accepting an input to an electronic device 201, the electronic device communicating with a pointing device 202, the pointing device 202 communicatively coupled with a skin pattern sensor 205, the method comprising the step of receiving an input by the pointing device 202; the method being **characterised in that** it further comprises the steps of while receiving the input by the pointing device 202, obtaining, based on the output of the skin pattern sensor 205, a representation of the object being sensed by the skin pattern sensor 205; and identifying the input as a valid input to the electronic device 201 when the representation comprises dermatoglyphs.

## Description

The present invention relates to user interfaces, in particular to a method and system for accepting an input to an electronic device.

User interfaces of electronic devices, especially portable electronic devices, are susceptible to unintentional actuation. Unintentional actuation may lead to activation of a function of the device which is not welcome by the user at the moment. For example, if the device is a mobile telephone, unintentional activation may lead to activation of an outgoing call or rejection of an incoming call. In case of other electronic devices, unintentional activation may lead to other more or less dangerous cases, such as activation of an application or deletion of a file.

Various attempts have been made to eliminate unintentional input to electronic devices, examples of which are presented below.

A US patent US6822634 entitled "SYSTEM COMPRISING A HANDHELD CONTROL DEVICE" discloses a system with a handheld control device in which the risk of unintentional control actuations is reduced without an additional control actuation or an additional button being required. The system is **characterized in that** it comprises a handheld control device on which the first and the second manual control members are provided, and that the control means are arranged to switch from a scroll-disabled mode to a scroll-enabled mode and back in response to application and interruption, respectively, of the actuation of the second manual control member. The second manual control member comprises, for example a pushbutton or a touch button. Using a finger of the hand holding the handheld control device, the user depresses the pushbutton, thus selecting the series to be scrolled by the control means. This can continue for as long as the pushbutton remains depressed and is realised by actuating the first manual control member by means of the other hand. Further scrolling is disabled by releasing the pushbutton or the touch key. Hence, in order to use a first control, a second control must be activated thus avoiding operation of a device based on the first control actuation only, which may be unintentional. By requiring a second control input it is assured that the first control input is intentional. A drawback of such a solution is that two separate actions or movements are required from the user. Moreover, such actuations must be simultaneous. Therefore a user needs to learn special key combinations to be actuated in order to perform a function. Such an approach also has its negative impact on responsiveness. Moreover, in case of touch dependent pointing devices, multitouch devices are expensive and an unintentional touch prevention of US6822634 would not perform well in such an application.

Other known solutions, known for example from cellular telephones, include means for locking and unlocking user input, such as a keypad lock or a touchscreen lock. Typically a series of steps must be performed to unlock the input. It is also common in telephones that, upon incoming call detection, input prevention is removed so that a user can answer the call with a single actuation of a relevant control such as a button. In case of touch screens, this often leads to unintentional actuations when the electronic device is drawn from a pocket.

Pointing devices are often exposed to unintentional input. For example, a mouse may be pushed while reaching for some documents on a desk, a touchpad may be touched while typing on a keyboard, a touchscreen may be tapped while drawing the electronic device from a pocket. In the known devices, all such inputs are detected and executed accordingly, although it is apparent that all are unintentional. The previously described lock/unlock techniques may be employed for all such pointing devices, nevertheless it would be very cumbersome for a user to activate and deactivate such a pointing device, by means of combination of keys, especially when it needs to be done frequently.

The problem associated with the present solutions, preventing unintentional actuations by means of pointing devices, include slow responsiveness and a need to learn an unlocking process.

It is therefore an object of the present invention to provide a method and system for accepting an input to an electronic device from a pointing device, wherein a quicker responsiveness is achieved and which do not require the user to learn locking and unlocking processes to avoid unintentional actuations.

The object of the invention is a method for accepting an input to an electronic device 201, the electronic device communicating with a pointing device 202, the pointing device 202 communicatively coupled with a skin pattern sensor 205, the method comprising the steps of receiving an input by the pointing device 202; while receiving the input by the pointing device 202, obtaining, based on the output of the skin pattern sensor 205, a representation of the object being sensed by the skin pattern sensor 205; and identifying the input as a valid input to the electronic device 201 when the representation comprises dermatoglyphs.

Preferably, dermatoglyphs determining the valid input are limited to fingerprints.

The input can be identified as valid by an input acceptance module within the pointing device or by software within the electronic device.

The object of the invention is also a computer program comprising program code means for performing all the steps of the method according to the invention when said program is run on a computer and a computer readable medium having computer-executable instructions performing all the steps of the computer-implemented method according to the invention.

Another object of the invention is a system for controlling an input to an electronic device, comprising a pointing device communicatively coupled with a skin pattern sensor, wherein the skin pattern sensor is arranged to detect an object which operates the pointing device, means for obtaining a representation of the object being sensed by the skin pattern sensor; and means for identifying the input as a valid input to the electronic device when the representation comprises dermatoglyphs.

The skin pattern sensor can be embedded with the pointing device or can be external to the pointing device.

The pointing device can be a computer mouse and the skin pattern sensor is located on a top surface of the mouse, or the pointing device can be a touch screen or a touch pad and the skin patterns sensor can sense substantially the whole touch-sensitive area of the touch screen or the touch pad.

The skin pattern sensor can be an optical, ultrasonic, passive capacitance or active capacitance sensor.

The means for identifying the input as a valid input comprise an input acceptance module can be embedded within the pointing device or can comprise software executable within the electronic device.

These and other objects of the invention presented herein are accomplished by providing an improved method and system for accepting an input to an electronic device from a pointing device. Further details and features of the system and the method, its nature and various advantages will become more apparent from the following detailed description of the preferred embodiments shown in a drawing, in which: Fig. 1A, Fig. 1B and Fig. 1C present examples of pointing devices for electronic devices; Fig. 2 depicts a diagram of a system according to the present invention; and Fig. 3 shows a block diagram of the method according to the present invention.

The common technical feature of all pointing devices, presented in the following exemplary embodiments, is the fact that all are associated with a skin pattern sensor, i.e. the skin pattern sensor is built in the pointing device or in a proximity thereof, such that when the user uses the pointing device, the skin pattern sensor is to be touched or be in proximity to user's palm, finger or any other part of human body that comprises dermatoglyphs. Therefore, the skin pattern sensor and its skin pattern recognition module, implemented either in hardware or software, shall be able to detect dermatoglyphs. This can be achieved for example by recognizing only main dermatoglyphs' features such as presence of known patterns defined by fingerprint classification systems.

It shall be noted that dermatoglyphs are skin patterns of the internal surfaces of the hands and feet hence are present on fingers, palms, toes, and soles and such a definition will be used throughout the present disclosure.

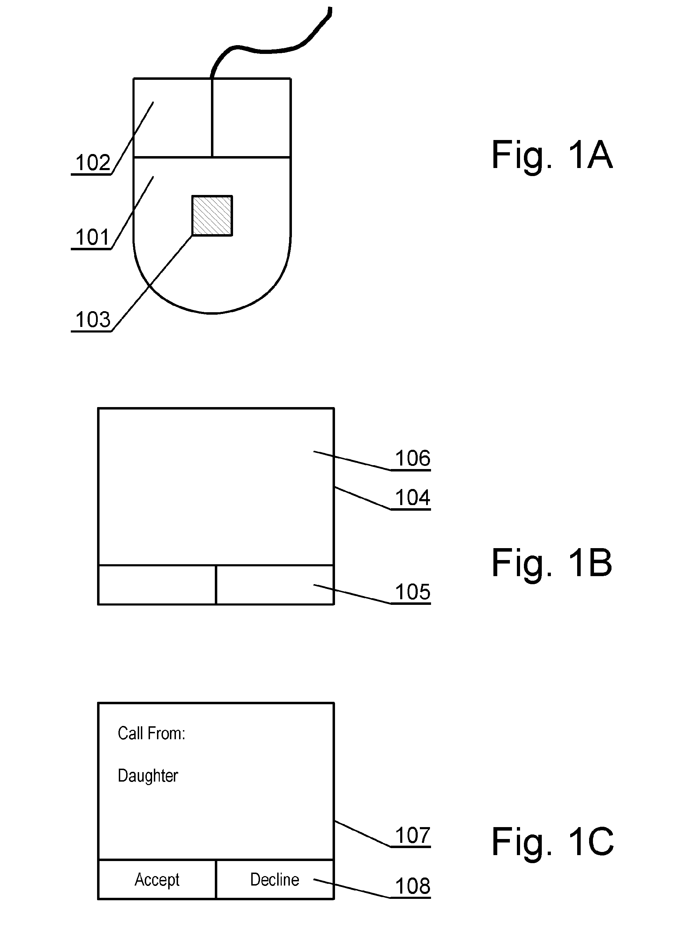

Fig. 1A presents a mouse 101 as an exemplary embodiment of a pointing device according to the present invention. This kind of pointing device is an external pointing device and may be for example a hand mouse or a foot mouse.

The mouse comprises a number of controls 102, such as buttons, and a skin pattern sensor 103. The skin patter sensor 103 is here positioned such that when typical mouse operations are performed, the skin pattern sensor 103 is able to read dermatoglyphs from the palm. According to the invention, movements of the mouse 101 or actuations of the buttons 102 will only be valid if the user's palm rests on the mouse 101 in a typical poison i.e. over the mouse. Hence, accidental movements will be treated as invalid since in such cases, the palm of the user is not positioned over the mouse 101. In another embodiment the skin pattern sensor 103 may also read objects in proximity to the skin pattern sensor 103.

The presence of a skin pattern sensor 103 is an efficient solution to the problem underlying the present invention, since a pure proximity sensor would detect all kinds of objects while a skin pattern sensor 103 allows for verification what kind of object is read. For example, moving the mouse 101 with an elbow or forearm will be treated as invalid input since there are not any dermatoglyphs on either elbows or forearms.

Additionally when dermatoglyphs are in contact with or in proximity to the skin pattern sensor 103 it means that they are adjacent to the skin pattern sensor 103. Therefore the term adjacency covers direct contact, proximity to or hovering above.

Fig. 1B presents a touchpad 104 as another embodiment of the present invention. This kind of pointing device is an internal pointing device, embedded in the electronic device; nevertheless a tablet can also be used as an external touchpad.

The touchpad comprises a touch sensitive area 106 and a plurality of controls 105 such as buttons. Preferably in such embodiment the skin pattern sensor is situated such that the skin pattern sensor can sense skin patterns present over the touch sensitive area 106. Preferably, the skin pattern sensor covers the whole touch sensitive area 106. Owing to this arrangement, any input via the touchpad can be sensed by the skin pattern sensor and identified as valid if the object causing this input includes dermatoglyphs.

Fig. 1C presents a touchscreen 107 as another embodiment of the present invention. This kind of pointing device is an internal pointing device. The touchscreen comprises a touch sensitive display area, covering the whole visible display screen, and a plurality of controls 108 such as graphical user interface buttons displayed on the display screen. Preferably, in such embodiment, the skin pattern sensor is situated such that the skin pattern sensor can sense skin patterns present over the touch sensitive display area. Owing to this arrangement, any input via the touchpad can be sensed by the skin pattern sensor and identified as valid if the object causing this input includes dermatoglyphs. Hence, an unintentional touch by documents, bills, coins, keys, fingernail or wrist will not be identified as a valid input.

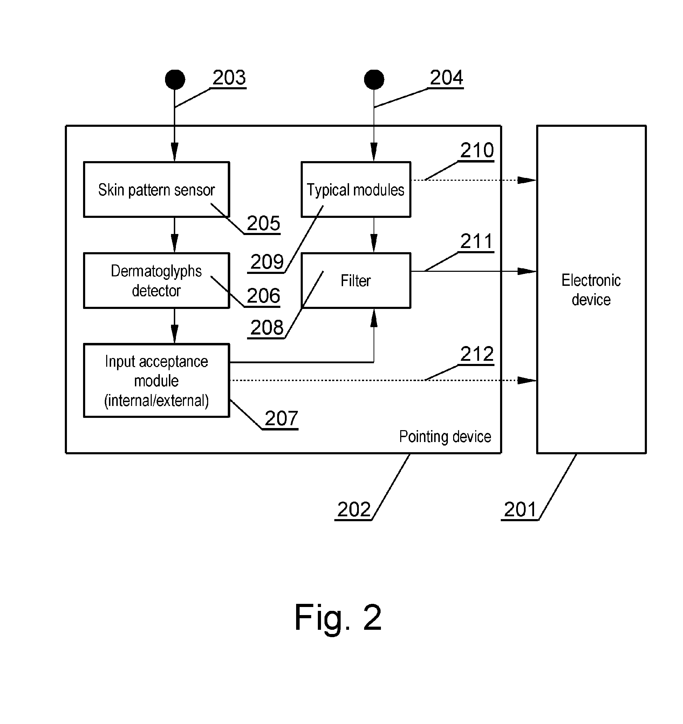

Fig. 2 depicts a diagram of a system according to the present invention. An electronic device 201 communicates and receives input from an internal or external pointing device 202, for example one of devices described with reference to Fig. 1A, 1B or 1C. The pointing device 202 receives input from an object being in proximity to or in contact with the pointing device 202 and its skin pattern sensor 205. The pointing device 202 receives a typical input 204 related to movement or actuation of buttons and a skin pattern input 203 detected by the skin pattern sensor 205.

The typical input 204 data are processed by the typical modules 209 section of the pointing device 202. The skin pattern sensor 205 reads the skin pattern and based on the output of the skin pattern sensor 205 a representation of the object, being sensed by the skin pattern sensor 205, is obtained. The skin pattern sensor 205 may sense objects being in contact or in proximity to the skin pattern sensor 205. The representation may be an image in a raster or vector form or a data structure, such as a table, describing the properties of the sensed object.

The skin pattern sensor 205 can be an optical, ultrasonic, passive capacitance, or active capacitance sensor.

The representation, for example in form of an image, from the skin pattern sensor 205 is sent to a dermatoglyphs detector 206 that upon analysis of the image is able to determine whether dermatoglyphs are present in the image. Results of the analysis are sent to the input acceptance module 207 that generates a signal, based on which it is determined that dermatoglyphs are present or not. The signal may be a Boolean signal that is fed to a filter 208 or, in another embodiment, directly to the electronic device 201. Similarly the typical modules section 209 feed data to the filter or, in another embodiment, directly to the electronic device 201.

The filter blocks or passes output of the typical modules section 209 to the electronic device 201, based on the input from the input acceptance module 207. Hence, when the input acceptance module 207 identifies that there are no dermatoglyphs detected in the image and data, received from the typical modules 209 section, indicate actuation of the pointing device 202, the filter 208 will not output any data to the electronic device 201.

In an embodiment where the electronic device 201 receives data from the typical modules 209 section and the input acceptance module 207, it is decided outside of the pointing device 202 whether the actuation of the pointing device is valid. This logic is preferably implemented in software residing in memory of the electronic device 201. In such a case a user may easily define a flag indicating whether skin pattern sensor is to be utilised.

In other embodiments, each of the modules 205, 206, 207 either separately or collectively may be external to the pointing device. Such a device may be called a palm sensor. For example, a thin layer package comprising a skin pattern sensor may be placed on top of a typical personal computer mouse. This palm sensor module may wirelessly communicate with software residing in the electronic device 201 controlled by the computer mouse. By means of the software executed on the electronic device 201 it is decided whether to allow or reject actuations of the computer mouse. Such solution is easy to implement and can be applied to pointing devices that presently exist on the market.

The same effect can be achieved with touchpads and touchscreens by placing a transparent palm sensor module over the touchpad or the touchscreen. In other embodiments the palm sensor module may be situated beneath the touchpad or the touchscreen. Electronic circuits performing tasks of modules 205, 206, 207 are very thin. Therefore the palm sensor module, when placed over the pointing device, does not interfere its operation.

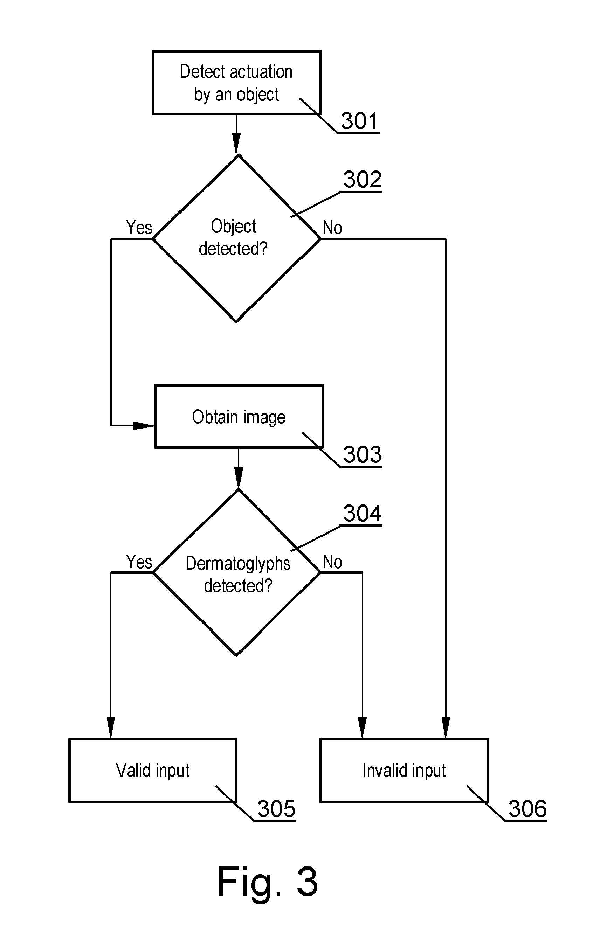

Fig. 3 shows a block diagram of the method according to the present invention. The procedure starts at 301 by receiving an input by the pointing device 202 by an object. The object may be in contact or in proximity 302 to the pointing device 202 and its corresponding skin pattern sensor. In case the pointing device 202 is actuated and no object is detected by the skin pattern sensor, the actuation is to be treated as invalid 306.

The next step of the procedure 303 is obtaining, based on the output of the skin pattern sensor, a representation of the object being sensed by the skin pattern sensor.

In step 304 the representation, for example an image, is analysed in order to determine whether any dermatoglyphs are present in the image. If dermatoglyphs are present in the image, in step 305 the input is identified as a valid input. Otherwise, when no dermatoglyphs are detected, in step 306 the system indicates that the actuation of the pointing device is not acceptable as a valid input.

It can be easily recognised, by one skilled in the art that the aforementioned systems and methods for accepting an input to an electronic device may be performed and/or controlled, partially or in full, by one or more computer programs comprising program code means.

Such computer programs are typically executed by utilizing the computing resources in a computing device such as personal computers, personal digital assistants, cellular telephones, receivers and decoders of digital television or the like. Applications are stored in or on a computer readable medium for example a non-volatile memory, such as a flash memory, hard-disk drive or volatile memory, for example RAM and are executed by a processor. These memories are exemplary recording media for storing computer programs comprising computer-executable instructions performing all the steps of the computer-implemented method according the invention presented herein.

The technique of the present invention may be implemented using any display, for example on a mobile phone, PDA's, portable computer or a desktop PC.

It can be easily recognised that there is a technical relationship among presented inventions of a method, a system, a computer program and a computer program readable medium since all involve one or more of the same or corresponding special technical features.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the invention. The presented preferred embodiments are exemplary only, and are not exhaustive of the scope of the invention presented herein. Accordingly, the scope of protection is not limited to the preferred embodiments described in the specification, but is only limited by the claims that follow.

## Claims

1. A method for accepting an input to an electronic device 201, the electronic device communicating with a pointing device 202, the pointing device 202 communicatively coupled with a skin pattern sensor 205, the method comprising the step of
- receiving an input by the pointing device 202;
the method being **characterised in that** it further comprises the steps of
- while receiving the input by the pointing device 202, obtaining, based on the output of the skin pattern sensor 205, a representation of the object being sensed by the skin pattern sensor 205; and
- identifying the input as a valid input to the electronic device 201 when the representation comprises dermatoglyphs.

2. The method according to claim 1, wherein dermatoglyphs determining the valid input are limited to fingerprints.

3. The method according to claim 1, wherein the input is identified as valid by an input acceptance module within the pointing device.

4. The method according to claim 1, wherein the input is identified as valid by software within the electronic device.

5. A computer program comprising program code means for performing all the steps of the method as claimed in any of claims 1 to 4 when said program is run on a computer.

6. A computer readable medium having computer-executable instructions performing all the steps of the computer-implemented method according to any of claims 1 to 4.

7. A system for controlling an input to an electronic device 201, comprising:
- a pointing device 202 communicatively coupled with a skin pattern sensor 205, wherein the skin pattern sensor 205 is arranged to detect an object which operates the pointing device 202,
- means for obtaining a representation of the object being sensed by the skin pattern sensor 205; and
- means for identifying the input as a valid input to the electronic device 201 when the representation comprises dermatoglyphs.

8. The system according to claim 7, **characterized in that** the skin pattern sensor 205 is embedded with the pointing device 202.

9. The system according to claim 7, **characterized in that** the skin pattern sensor 205 is external to the pointing device 202.

10. The system according to claim 7, **characterized in that** the pointing device 202 is a computer mouse and the skin pattern sensor 205 is located on a top surface of the mouse.

11. The system according to claim 7, **characterized in that** the pointing device 202 is a touch screen or a touch pad and the skin patterns sensor 205 senses substantially the whole touch-sensitive area of the touch screen or the touch pad.

12. The system according to claim 7, **characterized in that** the skin pattern sensor 205 is an optical, ultrasonic, passive capacitance or active capacitance sensor.

13. The system according to claim 7, **characterized in that** the means for identifying the input as a valid input comprise an input acceptance module 207 embedded within the pointing device 202.

14. The system according to claim 7, **characterized in that** the means for identifying the input as a valid input comprise software executable within the
electronic device 201.
